# EUROPEAN PATENT SPECIFICATION

(11) **EP 4 302 534 B1**
(45) Date of publication and mention of the grant of the patent: **13.05.2026**
(21) Application number: 22705267.7
(22) Date of filing: 01.02.2022
(51) Int. Cl.: H04W 64/00, H04W 88/08, G01S 5/00, G01S 5/02, H04W 24/10

(54) **DISTRIBUTED UNIT-CENTRAL UNIT-SERVER SIGNALING OF PER-SECTOR FEATURES FOR POSITIONING**
VERTEILTE EINHEITSZENTRALEINHEIT-SERVER-SIGNALISIERUNG VON PRO SEKTOR MERKMALEN ZUR POSITIONIERUNG
SIGNALISATION PAR UNITÉ DISTRIBUÉE-UNITÉ CENTRALE-SERVEUR DE CARACTÉRISTIQUES SECTORIELLES POUR UN POSITIONNEMENT

(30) Priority: 04.03.2021 GR 20210100131
(43) Date of publication of application: 10.01.2024
(73) Proprietor: QUALCOMM INCORPORATED, San Diego, California 92121-1714 (US)
(72) Inventor: GOPALAKRISHNAN, Sooryanarayanan, San Diego, California 92121-1714 (US); SUNDARARAJAN, Jay Kumar, San Diego, California 92121-1714 (US); MANOLAKOS, Alexandros, San Diego, California 92121-1714 (US); AKKARAKARAN, Sony, San Diego, California 92121-1714 (US); FISCHER, Sven, San Diego, California 92121-1714 (US); BHUSHAN, Naga, San Diego, California 92121 (US); YOO, Taesang, San Diego, California 92121-1714 (US); MUKKAVILLI, Krishna Kiran, San Diego, California 92121-1714 (US); DUAN, Weimin, San Diego, California 92121-1714 (US); JI, Tingfang, San Diego, California 92121 (US)
(74) Representative: Reddie & Grose LLP
(86) International application number: PCT/US2022/014796
(87) International publication number: WO 2022/186935

(56) References cited:
- ERICSSON: "Summary of offline discussion on common positioning and TRP issues v2", vol. RAN WG3, no. Online; 20200601 - 20200611, 15 June 2020 (2020-06-15), XP051898707, Retrieved from the Internet <URL:https://ftp.3gpp.org/tsg_ran/WG3_Iu/TSGR3_108-e/Docs/R3-204206.zip> [retrieved on 20200615]
- QUALCOMM INCORPORATED: "Local NR positioning in NG-RAN", vol. RAN WG3, no. Ljubljana, Slovenia; 20190826 - 20190830, 16 August 2019 (2019-08-16), XP051769793, Retrieved from the Internet <URL:http://www.3gpp.org/ftp/tsg_ran/WG3_Iu/TSGR3_105/Docs/R3-193586.zip> [retrieved on 20190816]
- CATT: "Summary of UE and gNB measurements for NR Positioning", vol. RAN WG1, no. Chongqing, China; 20191014 - 20191018, 22 October 2019 (2019-10-22), XP051798586, Retrieved from the Internet <URL:https://ftp.3gpp.org/tsg_ran/WG1_RL1/TSGR1_98b/Docs/R1-1910321.zip> [retrieved on 20191022]
- ERICSSON: "How to Support Positioning in F1AP", vol. RAN WG3, no. Xi'An, China; 20190408 - 20190412, 30 March 2019 (2019-03-30), XP051695214, Retrieved from the Internet <URL:http://www.3gpp.org/ftp/tsg%5Fran/WG3%5FIu/TSGR3%5F103bis/Docs/R3%2D191766%2Ezip> [retrieved on 20190330]
- MAHDI TRIKI ET AL: "Mobile Terminal Positioning via Power Delay Profile Fingerprinting: Reproducible Validation Simulations", 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 25 September 2006 (2006-09-25), pages 1 - 5, XP031051591, ISBN: 978-1-4244-0062-1

## Description

### CROSS-REFERENCE TO RELATED APPLICATION

The present application claims the benefit of Greek Patent Application No. 20210100131, filed on March 4, 2021, and titled "DISTRIBUTED UNIT-CENTRAL UNIT -SERVER SIGNALING OF PER-SECTOR FEATURES FOR POSITIONING,".

### FIELD OF THE DISCLOSURE

The present disclosure relates generally to wireless communications, and more specifically to wireless positioning.

### BACKGROUND

Wireless communications systems are widely deployed to provide various telecommunications services such as telephony, video, data, messaging, and broadcasts. Typical wireless communications systems may employ multiple-access technologies capable of supporting communications with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and long term evolution (LTE). LTE/LTE-Advanced is a set of enhancements to the universal mobile telecommunications system (UMTS) mobile standard promulgated by the Third Generation Partnership Project (3GPP).

A wireless communications network may include a number of base stations (BSs) that can support communications for a number of user equipments (UEs). A user equipment (UE) may communicate with a base station via the downlink and uplink. The downlink (or forward link) refers to the communications link from the base station to the UE, and the uplink (or reverse link) refers to the communications link from the UE to the base station. As will be described in more detail, a base station may be referred to as a Node B, a gNB, an access point (AP), a radio head, a transmit and receive point (TRP), a new radio (NR) base station, a 5G Node B, and/or the like.

The above multiple access technologies have been adopted in various telecommunications standards to provide a common protocol that enables different user equipment to communicate on a municipal, national, regional, and even global level. New radio (NR), which may also be referred to as 5G, is a set of enhancements to the LTE mobile standard promulgated by the Third Generation Partnership Project (3GPP). NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. Ericsson: "Summary of offline discussion on common positioning and TRP issues v2", 3GPP Draft; R3-204206, vol. RAN WG3, discusses single TRP ID vs TRP ID list in the measurement messages. It is discussed that there shall be no specification of whether the gNB-CU aggregates measurements from different gNB-DUs. It is also mentioned that the basic principal in positioning seems to be RAN does its best and LMF does with what it received. For aggregation, the CU should be well aware of the status of the DU in term of resource then it should not be an issue to aggregate.

### SUMMARY

The invention is defined in the independent claims, to which attention is directed. Optional features are set out in the dependent claims.

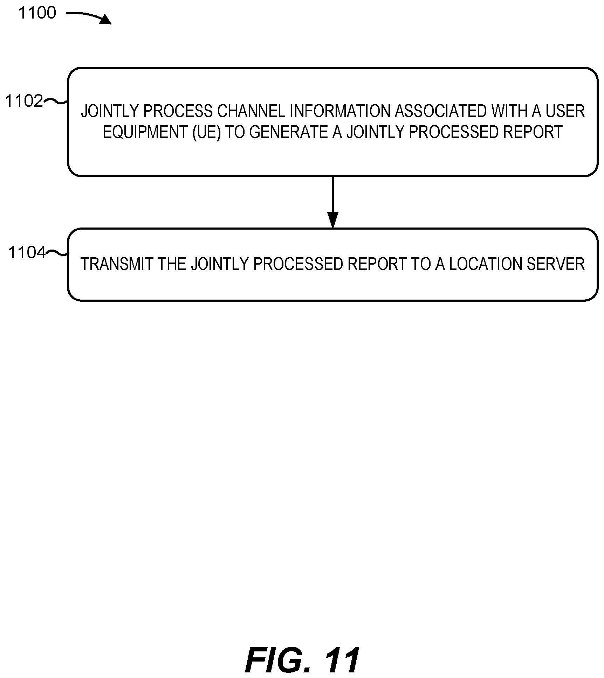

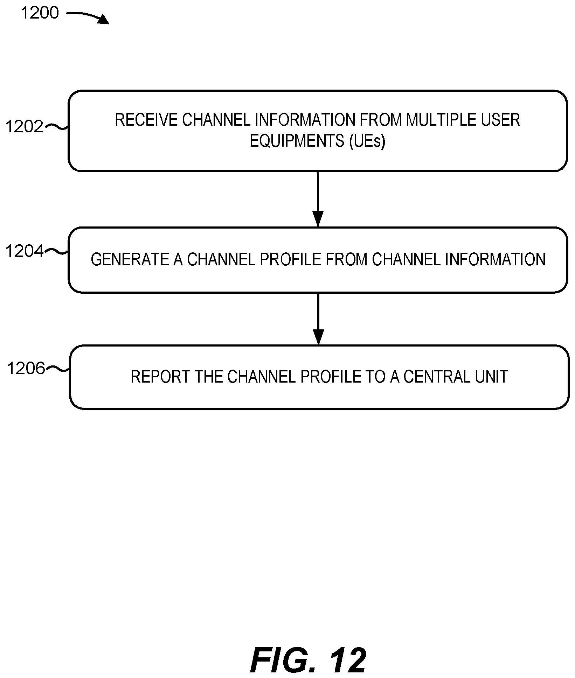

In the following the invention is best understood in view of figures 11 and 12 and the associated passages. The remaining embodiments, aspects and examples disclosed below are included for illustrative purpose and for facilitating the understanding of the invention.

According to aspects of the present disclosure, a method of wireless communication by a central unit (CU), jointly processes channel information associated with a user equipment (UE) in order to generate a jointly processed report. The channel information is collected from collocated transmit and receive points (TRPs) of a base station. The base station transmits the jointly processed report to a location server.

In further aspects, an apparatus for wireless communication in a central unit (CU), comprises a memory; a transceiver, and at least one processor communicatively coupled to the transceiver and the memory. The processor(s) is configured to jointly process channel information associated with a user equipment (UE) in order to generate a jointly processed report. The channel information is collected from collocated transmit and receive points (TRPs). The processor(s) is also configured to transmit, via the transceiver, the jointly processed report to a location server.

In other aspects, a method of wireless communication by a distributed unit (CU), comprising receiving channel information associated with multiple user equipments (UEs). The method also includes generating a channel profile based on the channel information, and reporting the channel profile to a central unit.

Aspects generally include a method, apparatus, system, computer program product, non-transitory computer-readable medium, user equipment, base station, wireless communications device, and processing system as substantially described with reference to and as illustrated by the accompanying drawings and specification.

The foregoing has outlined rather broadly the features and technical advantages of examples according to the disclosure in order that the detailed description that follows may be better understood. Additional features and advantages will be described. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that features of the present disclosure can be understood in detail, a particular description may be had by reference to aspects, some of which are illustrated in the appended drawings. It is to be noted, however, that the appended drawings illustrate only certain aspects of this disclosure and are therefore not to be considered limiting of its scope, for the description may admit to other equally effective aspects. The same reference numbers in different drawings may identify the same or similar elements.
FIGURE 1 is a block diagram conceptually illustrating an example of a wireless communications network, in accordance with various aspects of the present disclosure.
FIGURES 2A and 2B illustrate example wireless network structures, according to various aspects of the present disclosure.
FIGURES 3A to 3E are simplified block diagrams of several sample aspects of components that may be employed in wireless communication nodes and configured to support communication, in accordance with various aspects of the present disclosure.
FIGURES 4A and 4B are diagrams illustrating example frame structures and channels within the frame structures, according to aspects of the disclosure.
FIGURE 5 is a block diagram illustrating a base station and associated sectors, in accordance with aspects of the present disclosure.
FIGURE 6 is a block diagram illustrating components of base stations, as well as a core network, in accordance with aspects of the present disclosure.
FIGURE 7 is a block diagram illustrating communication between a UE, base station, and location server, in accordance with aspects of the present disclosure.
FIGURE 8 is a diagram illustrating a two-dimensional (2D) truncated power delay profile (TPDP), in accordance with aspects of the present disclosure.
FIGURE 9 is a diagram illustrating concatenating of channel profiles, in accordance with aspects of the present disclosure.
FIGURE 10 is a timing diagram illustrating an example of distributed unit (DU) to central unit (CU) to server signaling, in accordance with various aspects of the present disclosure.
FIGURE 11 is a flow diagram illustrating an example process performed, for example, by a central unit, in accordance with various aspects of the present disclosure.
FIGURE 12 is a flow diagram illustrating an example process performed, for example, by a distributed unit, in accordance with various aspects of the present disclosure.

### DETAILED DESCRIPTION

Various aspects of the disclosure are described more fully below with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings, one skilled in the art should appreciate that the scope of the disclosure is intended to cover any aspect of the disclosure, whether implemented independently of or combined with any other aspect of the disclosure. For example, an apparatus may be implemented or a method may be practiced using any number of the aspects set forth. In addition, the scope of the disclosure is intended to cover such an apparatus or method, which is practiced using other structure, functionality, or structure and functionality in addition to or other than the various aspects of the disclosure set forth. It should be understood that any aspect of the disclosure disclosed may be embodied by one or more elements of a claim.

Several aspects of telecommunications systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described using terminology commonly associated with 5G and later wireless technologies, aspects of the present disclosure can be applied in other generation-based communications systems, such as and including 3G and/or 4G technologies.

In cellular systems, the position of a mobile user equipment (UE) may be determined based on signals transmitted from the UE to a base station. Each base station is associated with three (3) hexagonal sectors, with the UE located in one of the sectors. Each base station includes multiple distributed units (DUs), with each distributed unit collecting information from one of the sectors. The DUs may also be referred to as transmit and receive points (TRPs). The DUs communicate with a central unit (CU) via an F1 interface, as described in 3GPP TS 38.473. The base stations communicate with the core network via a next generation (NG) interface, such as new radio (NR) positioning protocol A (PPa), as described in 3GPP TS 38.455. The core network may include a location management function.

If the UE is located near sector edges, then jointly processing channel information from multiple sectors leads to better estimates of positioning features, resulting in more accurate positioning. Jointly processing channel information from multiple sectors, at the base station, may reduce overhead in the report transmitted to the server. Aspects of the present disclosure relate to jointly processing location information received from collocated DUs. Location information is extracted from the jointly processed data, and transmitted to a location server.

More specifically, a UE transmits a signal (e.g., reference signal), indicating channel information, to the base station. The channel information may be uplink or downlink positioning information, such as angle of arrival (AoA) or angle of departure (AoD) information. The DU corresponding to the sector in which the UE is located receives the channel information and estimates positioning features, which are forwarded to the CU. The CU then extracts further positioning features (e.g., channel profile, angle of arrival (AoA), time of arrival, etc.) and transmits a position location report to an upstream server, such as a location server. Based on the report, the location server computes the position of the UE.

According to aspects of the present disclosure, per-sector features are jointly processed at the base station and reported to a location server. In one implementation, each DU transmits a per-sector time-angle channel profile to the CU. The CU then processes the per-sector channel profiles to obtain a cross-sector time-angle channel profile. The CU reports features derived from the cross-sector channel profile to the server.

In other aspects of the present disclosure, each DU reports a per-sector one-dimensional (1D) truncated power-delay profile (TPDP) to the CU. The 1D TPDP may be an angle-averaged version of the two-dimensional (2D) TPDP. The 1D TPDP may consist of powers of the top N channel taps, delays of the top N channel taps, as well as a signal-to-interference-plus-noise ratio (SINR). The CU uses the received per-sector 1D TPDPs to compute a time-of-arrival (ToA) estimate, which the CU reports to the server.

The terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used, the term "UE" may be referred to interchangeably as an "access terminal" or "AT," a "client device," a "wireless device," a "subscriber device," a "subscriber terminal," a "subscriber station," a "user terminal" (UT), a "mobile device," a "mobile terminal," a "mobile station," or variations thereof. Generally, UEs can communicate with a core network via a RAN, and through the core network, the UEs can be connected with external networks such as the Internet and with other UEs. Of course, other mechanisms of connecting to the core network, to the Internet, or to both are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a new radio (NR) Node B (also referred to as a gNB or gNodeB), etc. A base station may primarily support wireless access by UEs, including supporting data, voice, signaling connections, or various combinations thereof for the supported UEs. In some systems, a base station may provide purely edge node signaling functions while in other systems it may provide additional control functions, network management functions, or both. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). In this description, the term traffic channel (TCH) can refer to either an uplink / reverse or downlink / forward traffic channel.

The term "base station" may refer to a single physical transmit and receive point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals (or simply "reference signals") the UE is measuring. Because a TRP is the point from which a base station transmits and receives wireless signals, references to transmission from or reception at a base station are to be understood as referring to a particular TRP of the base station.

In some implementations that support positioning of UEs, a base station may not support wireless access by UEs (e.g., may not support data, voice, signaling connections, or various combinations thereof for UEs), but may instead transmit reference signals to UEs to be measured by the UEs, may receive and measure signals transmitted by the UEs, or both. Such a base station may be referred to as a positioning beacon (e.g., when transmitting signals to UEs), as a location measurement unit (e.g., when receiving and measuring signals from UEs), or both.

An "RF signal" comprises an electromagnetic wave of a given frequency that transports information through the space between a transmitter and a receiver. As used, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. An RF signal may also be referred to as a "wireless signal" or simply a "signal" where it is clear from the context that the term "signal" refers to a wireless signal or an RF signal.

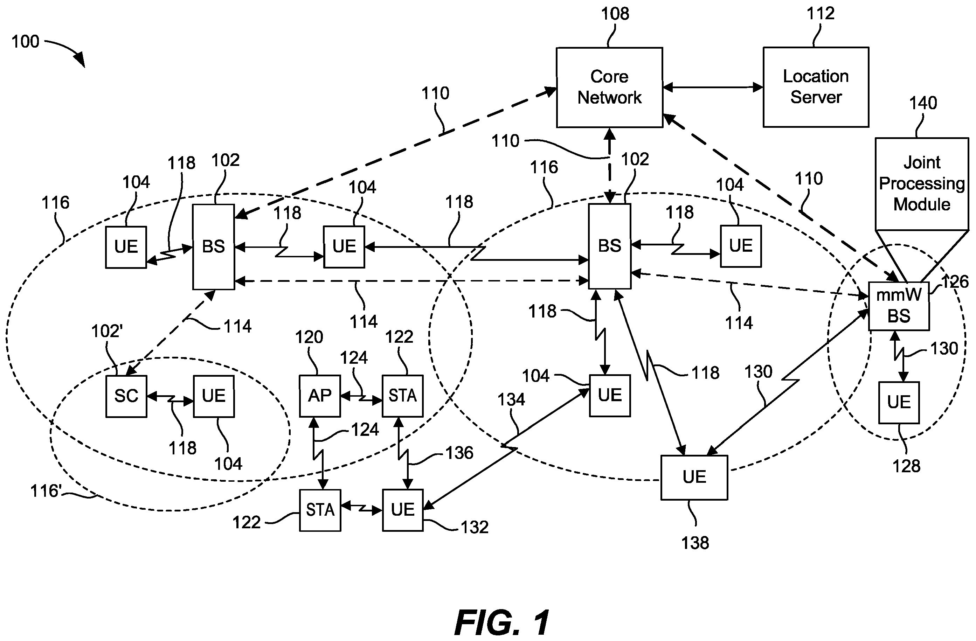

FIGURE 1 illustrates an exemplary wireless communications system 100 according to various aspects of the present disclosure. The wireless communications system 100 (which may also be referred to as a wireless wide area network (WWAN)) may include various base stations (BSs) 102 and various UEs 104. The base stations 102 may include macro cell base stations (e.g., high power cellular base stations), small cell base stations (e.g., low power cellular base stations), or both. In an aspect, the macro cell base station may include eNBs, ng-eNBs, or both, where the wireless communications system 100 corresponds to an LTE network, or gNBs where the wireless communications system 100 corresponds to an NR network, or a combination of both, and the small cell base stations may include femtocells, picocells, microcells, etc.

The base stations 102 may collectively form a radio access network (RAN) and interface with a core network 108 (e.g., an evolved packet core (EPC) or a 5G core (5GC)) through backhaul links 110, and through the core network 108 to one or more location servers 112 (which may be part of the core network 108 or may be external to the core network 108). In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 114, which may be wired or wireless.

The base stations 102 may wirelessly communicate with the UEs 104. Each of the base stations 102 may provide communication coverage for a respective geographic coverage area 116. In an aspect of the present disclosure, one or more cells may be supported by a base station 102 in each geographic coverage area 116. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), a virtual cell identifier (VCI), a cell global identifier (CGI)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 116.

While neighboring macro cell base stations' 102 geographic coverage areas 116 may partially overlap (e.g., in a handover region), some of the geographic coverage areas 116 may be substantially overlapped by a larger geographic coverage area 116. For example, a small cell (SC) base station 102' may have a coverage area 116' that substantially overlaps with the geographic coverage area 116 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

Communication links 118 between the base stations 102 and the UEs 104 may include uplink (also referred to as reverse link) transmissions from a UE 104 to a base station 102, downlink (also referred to as forward link) transmissions from a base station 102 to a UE 104, or both. The communication links 118 may use MIMO antenna technology, including spatial multiplexing, beamforming, transmit diversity, or various combinations thereof. The communication links 118 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 120 in communication with WLAN stations (STAs) 122 via communication links 124 in an unlicensed frequency spectrum (e.g., 5 GHz). When communicating in an unlicensed frequency spectrum, the WLAN STAs 122, the WLAN AP 120, or various combinations thereof may perform a clear channel assessment (CCA) or listen before talk (LBT) procedure prior to communicating in order to determine whether the channel is available.

The small cell base station 102' may operate in a licensed, an unlicensed frequency spectrum, or both. When operating in an unlicensed frequency spectrum, the small cell base station 102' may employ LTE or NR technology and use the same 5 GHz unlicensed frequency spectrum as used by the WLAN AP 120. The small cell base station 102', employing LTE / 5G in an unlicensed frequency spectrum, may boost coverage to the access network, increase capacity of the access network, or both. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 126 that may operate in mmW frequencies, in near mmW frequencies, or combinations thereof in communication with a UE 128. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 126 and the UE 128 may utilize beamforming (transmit, receive, or both) over a mmW communication link 130 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while canceling to suppress radiation in undesired directions.

Transmit beams may be quasi-collocated, meaning that they appear to the receiver (e.g., a UE) as having the same parameters, regardless of whether or not the transmitting antennas of the network node themselves are physically collocated. In NR, there are four types of quasi-collocation (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting, adjust the phase setting, or combinations thereof, of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Receive beams may be spatially related. A spatial relation means that parameters for a transmit beam for a second reference signal can be derived from information about a receive beam for a first reference signal. For example, a UE may use a particular receive beam to receive one or more reference downlink reference signals (e.g., positioning reference signals (PRSs), narrowband reference signals (NRS) tracking reference signals (TRS), phase tracking reference signal (PTRS), cell-specific reference signals (CRS), channel state information reference signals (CSI-RS), primary synchronization signals (PSS), secondary synchronization signals (SSS), synchronization signal blocks (SSBs), etc.) from a base station. The UE can then form a transmit beam for sending one or more uplink reference signals (e.g., uplink positioning reference signals (UL-PRSs), sounding reference signal (SRS), demodulation reference signals (DMRS), PTRS, etc.) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/126, UEs 104/128) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/128 and the cell in which the UE 104/128 either performs the initial radio resource control (RRC) connection establishment procedure or initiates the RRC connection re-establishment procedure. The primary carrier carries all common and UE-specific control channels and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, because both primary uplink and downlink carriers are typically UE-specific. This means that different UEs 104/128 in a cell may have different downlink primary carriers. The same is true for the uplink primary carriers. The network is able to change the primary carrier of any UE 104/128 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIGURE 1, one of the frequencies utilized by the macro cell base stations 102 may be an anchor carrier ( e.g., primary carrier "PCell") and other frequencies utilized by the macro cell base stations 102, the mmW base station 126, or combinations thereof may be secondary carriers ("SCells"). The simultaneous transmission, reception, or both of multiple carriers enables the UE 104/128 to significantly increase its data transmission rates, reception rates, or both. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as a UE 132, that connects indirectly to one or more communication networks via one or more device-to-device (D2D) peer-to-peer (P2P) links (referred to as "sidelinks"). In the example of FIGURE 1, the UE 132 has a D2D P2P link 134 with one of the UEs 104 connected to one of the base stations 102 (e.g., through which UE 132 may indirectly obtain cellular connectivity) and a D2D P2P link 136 with the WLAN STA 122 connected to the WLAN AP 120 (through which UE 132 may indirectly obtain WLAN-based Internet connectivity). In an example, the D2D P2P link 134 and D2D P2P link 136 may be supported with any well-known D2D RAT, such as LTE Direct (LTE-D), WiFi Direct (WiFi-D), Bluetooth^{®}, and so on.

The wireless communications system 100 may further include a UE 138 that may communicate with a macro cell base station 102 over a communication link 118, with the mmW base station 126 over the mmW communication link 130, or combinations thereof. For example, the macro cell base station 102 may support a PCell and one or more SCells for the UE 138 and the mmW base station 126 may support one or more SCells for the UE 138.

The base stations 102, 126 may include a joint processing module 140. For brevity, only one base station 102, 126 is shown as including the joint processing module 140. The joint processing module 140 may jointly process channel information associated with a user equipment (UE) in order to generate a jointly processed report. The joint processing module 140 transmits the jointly processed report to a location server.

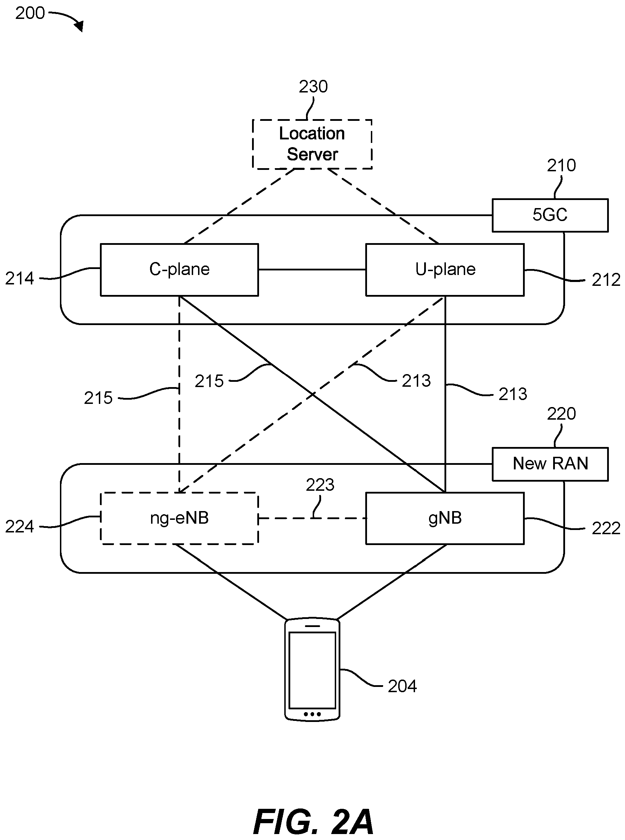

FIGURE 2A illustrates an example wireless network structure 200, according to various aspects of the present disclosure. For example, a 5G core (5GC) 210 (also referred to as a next generation core (NGC)) can be viewed functionally as control plane (c-plane) functions 214 (e.g., UE registration, authentication, network access, gateway selection, etc.) and user plane (u-plane) functions 212, (e.g., UE gateway function, access to data networks, IP routing, etc.) which operate cooperatively to form the core network. A user plane interface (NG-U) 213 and a control plane interface (NG-C) 215 connect a gNB 222 to the 5GC 210 and specifically to the control plane functions 214 and user plane functions 212. In an additional configuration, in a new RAN 220, an ng-eNB 224 may also be connected to the 5GC 210 via the NG-C 215 to the control plane functions 214 and NG-U 213 to user plane functions 212. Further, the ng-eNB 224 may directly communicate with the gNB 222 via a backhaul connection 223. In some configurations, the new RAN 220 may only have one or more gNBs 222, while other configurations include one or more of both ng-eNBs 224 and gNBs 222. Either the gNB 222 or ng-eNB 224 may communicate with UEs 204 (e.g., any of the UEs depicted in FIGURE 1).

Another optional aspect may include a location server 230 (similar to the location server 112 of FIGURE 1), which may be in communication with the 5GC 210 to provide location assistance for UEs 204. The location server 230 can be implemented as a group of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, via the Internet (not illustrated), or via both. Further, the location server 230 may be integrated into a component of the core network, or alternatively may be external to the core network.

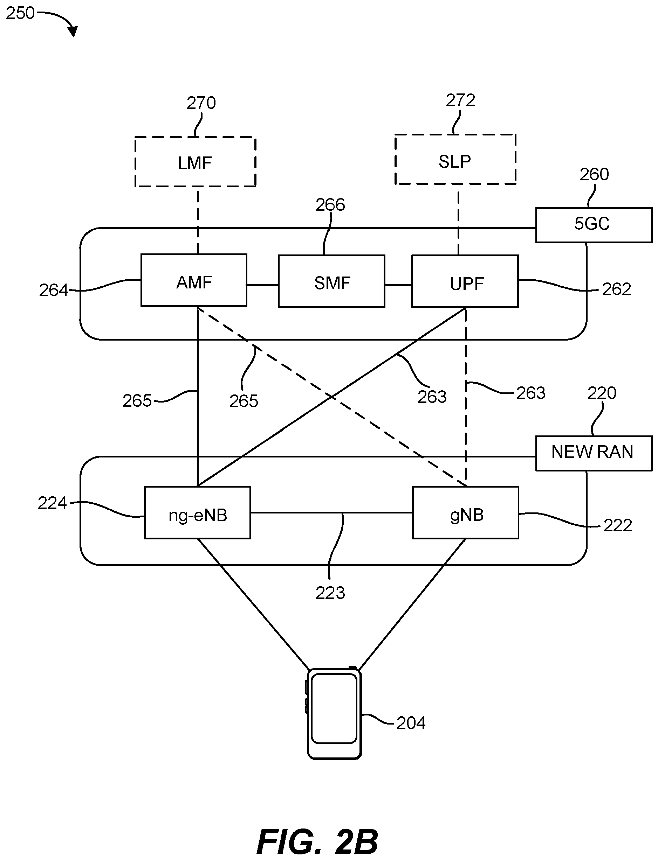

FIGURE 2B illustrates another example wireless network structure 250, according to various aspects of the present disclosure. For example, a 5GC 260 can be viewed functionally as control plane functions, provided by an access and mobility management function (AMF) 264, and user plane functions, provided by a user plane function (UPF) 262, which operate cooperatively to form the core network (e.g., 5GC 260). A user plane interface 263 and control plane interface 265 connect the ng-eNB 224 to the 5GC 260 and specifically to the UPF 262 and AMF 264, respectively. In an additional configuration, the gNB 222 may also be connected to the 5GC 260 via a control plane interface 265 to the AMF 264 and user plane interface 263 to the UPF 262. Further, the ng-eNB 224 may directly communicate with the gNB 222 via the backhaul connection 223, with or without gNB direct connectivity to the 5GC 260. In some configurations, the new RAN 220 may only have one or more gNBs 222, while other configurations include one or more of both ng-eNBs 224 and gNBs 222. Either the gNB 222 or ng-eNB 224 may communicate with the UEs 204 (e.g., any of the UEs depicted in FIGURE 1). The base stations of the new RAN 220 communicate with the AMF 264 over an N2 interface and with the UPF 262 over an N3 interface.

The functions of the AMF 264 include registration management, connection management, reachability management, mobility management, lawful interception, transport for session management (SM) messages between the UE 204 and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the new RAN 220 and the LMF 270, evolved packet system (EPS) bearer identifier allocation for interworking with the EPS, and UE 204 mobility event notification. In addition, the AMF 264 also supports functionalities for non-3GPP access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as a secure user plane location (SUPL) location platform (SLP) 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as an N11 interface.

Another optional aspect may include an LMF 270, which may be in communication with the 5GC 260 to provide location assistance for UEs 204. The LMF 270 can be implemented as multiple separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, via the Internet (not illustrated), or via both. The SLP 272 may support similar functions to the LMF 270, but whereas the LMF 270 may communicate with the AMF 264, new RAN 220, and UEs 204 over a control plane (e.g., using interfaces and protocols intended to convey signaling messages and not voice or data), the SLP 272 may communicate with UEs 204 and external clients (not shown in FIGURE 2B) over a user plane (e.g., using protocols intended to carry voice or data like the transmission control protocol (TCP) and/or IP).

In an aspect of the present disclosure, the LMF 270, the SLP 272, or both may be integrated into a base station, such as the gNB 222 or the ng-eNB 224. When integrated into the gNB 222 or the ng-eNB 224, the LMF 270 or the SLP 272 may be referred to as a location management component (LMC). However, references to the LMF 270 and the SLP 272 include both the case in which the LMF 270 and the SLP 272 are components of the core network (e.g., 5GC 260) and the case in which the LMF 270 and the SLP 272 are components of a base station.

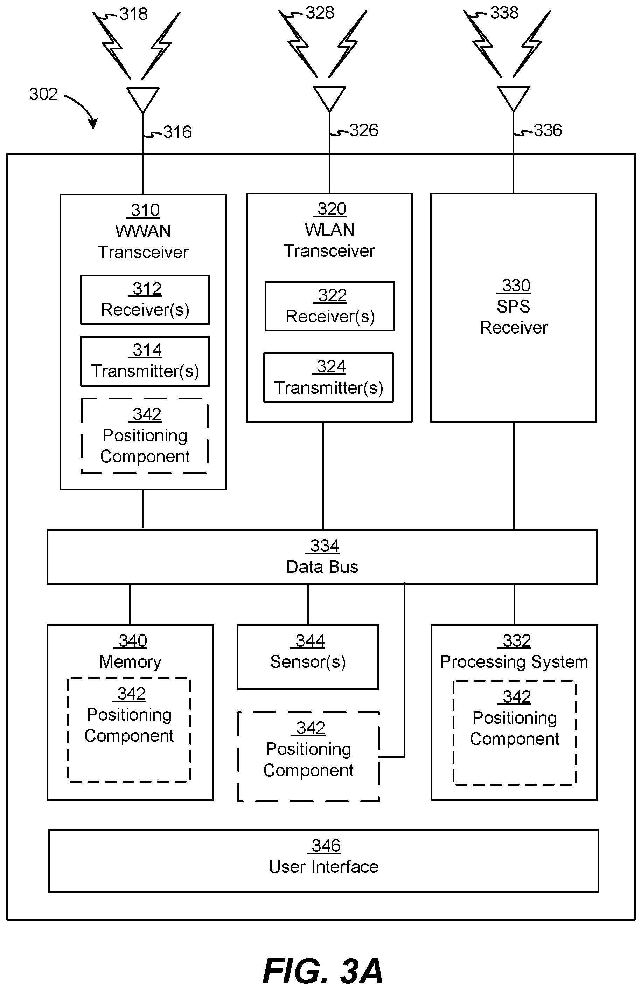

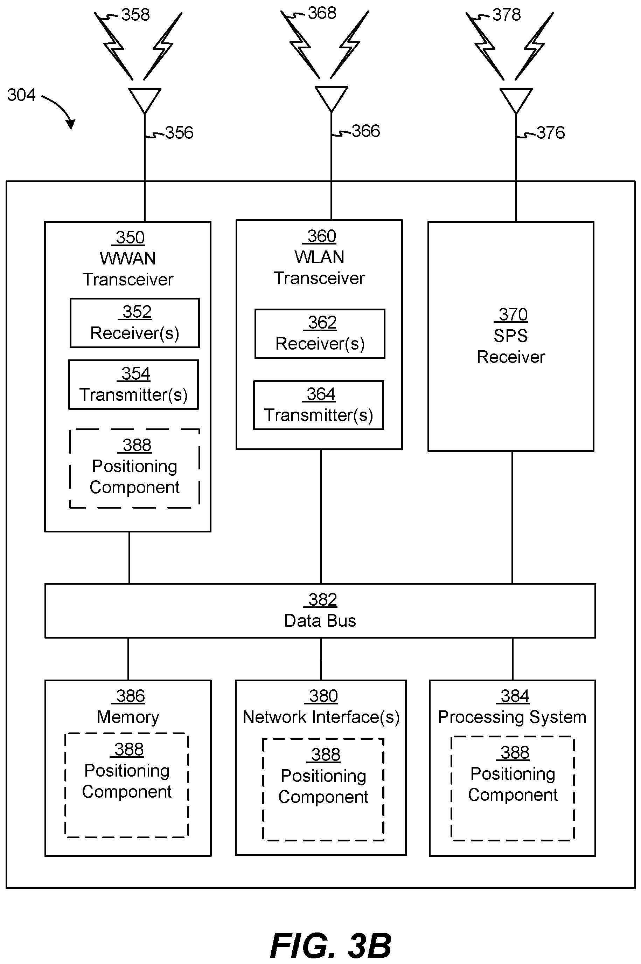

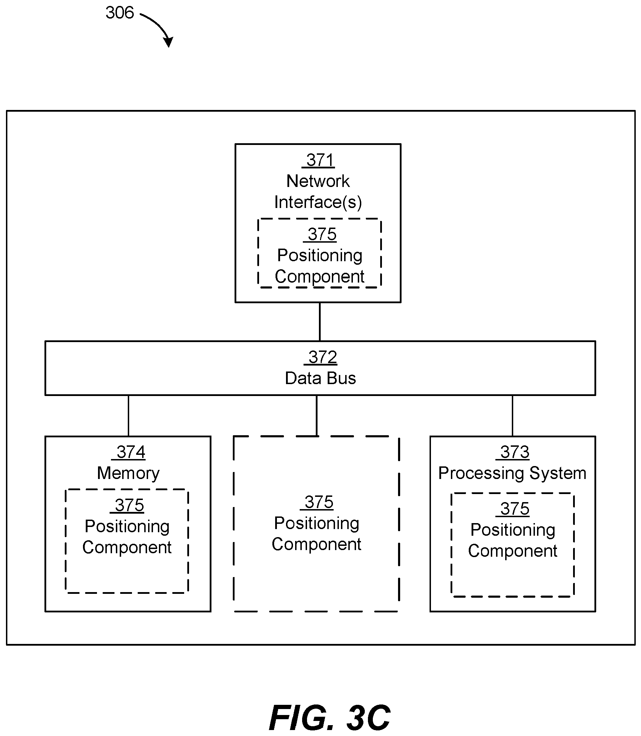

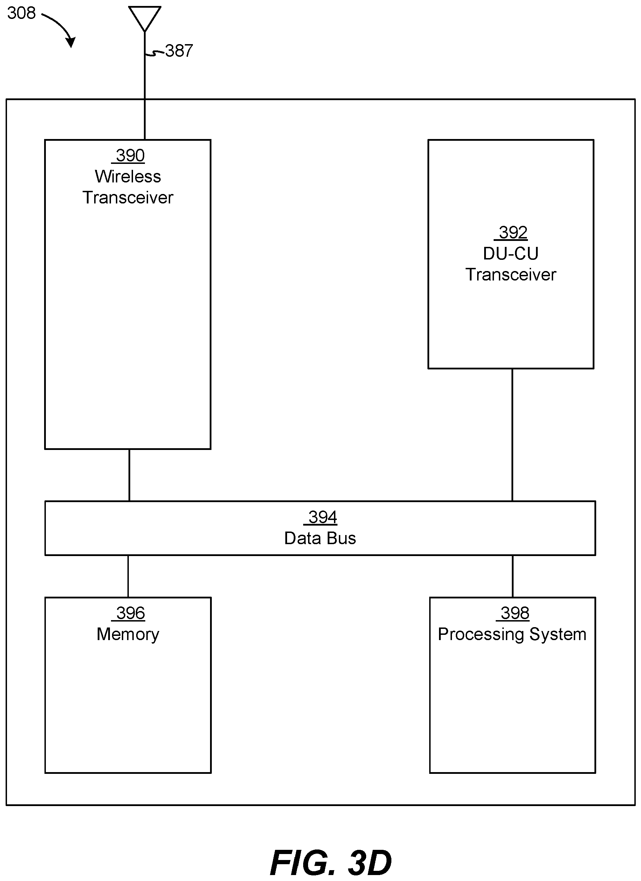

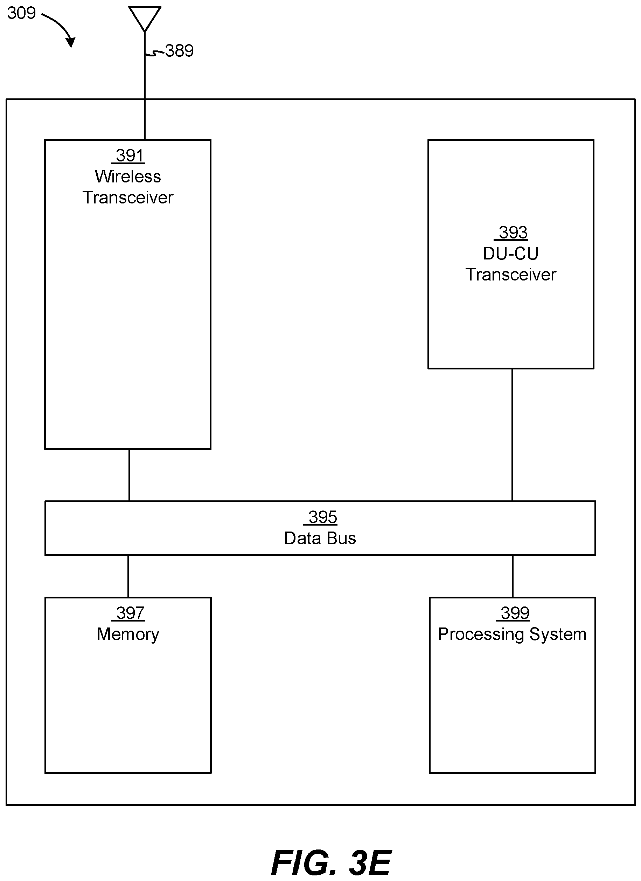

FIGURES 3A, 3B, 3C, 3D, and 3E illustrate several exemplary components (represented by corresponding blocks) that may be incorporated into a UE 302 shown in FIGURE 3A (which may correspond to any of the UEs described), a base station 304 shown in FIGURE 3B (which may correspond to any of the base stations described), a network entity 306 shown in FIGURE 3C (which may correspond to or embody any of the network functions described, including the location server 230 and the LMF 270), a distributed unit (DU) 308 of the base station 304 shown in FIGURE 3D, and a central unit (CU) 309 of the base station 304 shown in FIGURE 3E to support the file transmission operations as taught. It will be appreciated that these components may be implemented in different types of apparatuses in different implementations (e.g., in an application-specific integrated circuit (ASIC), in a system-on-chip (SoC), etc.). The illustrated components (e.g., UE 302, base station 304, and network entity 306) may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers, communicate via different technologies, or both.

The UE 302 and the base station 304 each include a wireless wide area network (WWAN) transceiver, such as a WWAN transceiver 310 and WWAN transceiver 350, respectively, configured to communicate via one or more wireless communication networks (not shown), such as an NR network, an LTE network, a GSM network, or the like. The WWAN transceivers 310 and 350 may be connected to one or more antennas, such as an antenna 316 and antenna 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding a signal 318 and a signal 358 (e.g., messages, indications, information, and so on), respectively, and, conversely, for receiving and decoding signals (e.g., messages, indications, information, pilots, and so on), such as the signal 318 and signal 358, respectively, in accordance with the designated RAT. Specifically, the WWAN transceivers 310 and 350 include one or more transmitters, such as a transmitter 314 and transmitter 354, respectively, for transmitting and encoding signals 318 and 358, respectively, and one or more receivers, such as a receiver 312 and receiver 352, respectively, for receiving and decoding signals 318 and 358, respectively.

The UE 302 and the base station 304 also include, at least in some cases, a wireless local area network (WLAN) transceiver 320 and WLAN transceiver 360, respectively. The WLAN transceivers 320 and 360 may be connected to one or more antennas, such as an antenna 326 and antenna 366, respectively, for communicating with other network nodes, such as other UEs, access points, base stations, etc., via at least one designated RAT (e.g., WiFi, LTE-D, Bluetooth^{®}, etc.) over a wireless communication medium of interest. The WLAN transceivers 320 and 360 may be variously configured for transmitting and encoding signals (e.g., messages, indications, information, and so on), such as a signal 328 and a signal 368, respectively, and, conversely, for receiving and decoding signals, such as the signal 328 and the signal 368, respectively, in accordance with the designated RAT. Specifically, the WLAN transceivers 320 and 360 include one or more transmitters, such as a transmitter 324 and transmitter 364, respectively, for transmitting and encoding signals, such as the signals 328 and 368, respectively, and one or more receivers, such as a receiver 322 and receiver 362, respectively, for receiving and decoding signals 328 and 368, respectively.

Transceiver circuitry including at least one transmitter and at least one receiver may comprise an integrated device (e.g., embodied as a transmitter circuit and a receiver circuit of a single communication device) in some implementations, may comprise a separate transmitter device and a separate receiver device in some implementations, or may be embodied in other ways in other implementations. In an aspect of the present disclosure, a transmitter may include or be coupled to multiple antennas (e.g., antennas 316, 326, 356, 366), such as an antenna array, that permits the respective apparatus to perform transmit "beamforming," as described. Similarly, a receiver may include or be coupled to multiple antennas (e.g., antennas 316, 326, 356, 366), such as an antenna array, that permits the respective apparatus to perform receive beamforming, as described. In an aspect, the transmitter and receiver may share the same antennas (e.g., antennas 316, 326, 356, 366), such that the respective apparatus can only receive or transmit at a given time, not both at the same time. A wireless communication device (e.g., one or both of the transceivers 310 and 320, transceiver 350 and 360, or both) of the UE 302, the base station 304, or both may also comprise a network listen module (NLM) or the like for performing various measurements.

The UE 302 and the base station 304 may also include satellite positioning systems (SPS) receivers, such as an SPS receiver 330 and SPS receiver 370, respectively. The SPS receivers 330 and 370 may be connected to one or more antennas, such as an antenna 336 and antenna 376, respectively, for receiving SPS signals, such as an SPS signal 338 and SPS signal 378, respectively, such as global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. The SPS receivers 330 and 370 may comprise any suitable hardware, software, or both for receiving and processing the SPS signals 338 and 378, respectively. The SPS receivers 330 and 370 request information and operations as appropriate from the other systems, and perform calculations necessary to determine positions of the UE 302 and the base station 304 using measurements obtained by any suitable SPS algorithm.

The base station 304 and the network entity 306 each include at least one network interface, such as a network interface 380 and network interface 371, for communicating with other network entities. For example, the network interfaces 380 and 371 (e.g., one or more network access ports) may be configured to communicate with one or more network entities via a wire-based or wireless backhaul connection. In some aspects, the network interfaces 380 and 371 may be implemented as transceivers configured to support wire-based or wireless signal communication. This communication may involve, for example, sending and receiving messages, parameters, other types of information, or various combinations thereof.

The UE 302, the base station 304, and the network entity 306 also include other components that may be used in conjunction with the operations as disclosed. The UE 302 includes processor circuitry implementing a processing system 332 for providing functionality relating to, for example, wireless positioning, and for providing other processing functionality. The base station 304 includes a processing system 384 for providing functionality relating to, for example, wireless positioning as disclosed, and for providing other processing functionality. The network entity 306 includes a processing system 373 for providing functionality relating to, for example, wireless positioning as disclosed, and for providing other processing functionality. In an aspect, the processing systems 332, 384, and 373 may include, for example, one or more general purpose processors, multi-core processors, ASICs, digital signal processors (DSPs), field programmable gate arrays (FPGA), or other programmable logic devices or processing circuitry.

The UE 302, the base station 304, and the network entity 306 include memory circuitry implementing memory components 340, 386, and 374 (e.g., each including a memory device), respectively, for maintaining information (e.g., information indicative of reserved resources, thresholds, parameters, and so on). In some cases, the UE 302, the base station 304, and the network entity 306 may include positioning components 342, 388, and 375, respectively. The positioning components 342, 388, and 375 may be hardware circuits that are part of or coupled to the processing systems 332, 384, and 373, respectively, that, when executed, cause the UE 302, the base station 304, and the network entity 306 to perform the functionality described. In other aspects, the positioning components 342, 388, and 375 may be external to the processing systems 332, 384, and 373 (e.g., part of a modem processing system, integrated with another processing system, etc.). Alternatively, the positioning components 342, 388, and 375 may be memory modules stored in the memory components 340, 386, and 374, respectively, that, when executed by the processing systems 332, 384, and 373 (or a modem processing system, another processing system, etc.), cause the UE 302, the base station 304, and the network entity 306 to perform the functionality described.

FIGURE 3A illustrates possible locations of the positioning component 342, which may be part of the WWAN transceiver 310, the memory component 340, the processing system 332, or any combination thereof, or may be a standalone component. FIGURE 3B illustrates possible locations of the positioning component 388, which may be part of the WWAN transceiver 350, the memory component 386, the network interface(s) 380, the processing system 384, or any combination thereof, or may be a standalone component. FIGURE 3C illustrates possible locations of the positioning component 375, which may be part of the network interface(s) 371, the memory component 374, the processing system 373, or any combination thereof, or may be a standalone component.

The UE 302 may include one or more sensors 344 coupled to the processing system 332 to provide movement information, orientation information, or both that is independent of motion data derived from signals received by the WWAN transceiver 310, the WLAN transceiver 320, or the SPS receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), any other type of movement detection sensor, or combinations thereof. Moreover, the sensor(s) 344 may include different types of devices and may combine their outputs in order to provide motion information. For example, the sensor(s) 344 may use a combination of a multi-axis accelerometer and orientation sensors to provide the ability to compute positions in 2D or 3D coordinate systems.

In addition, the UE 302 includes a user interface 346 for providing indications (e.g., audible indications, visual indications, or both) to a user, for receiving user input (e.g., upon user actuation of a sensing device such a keypad, a touch screen, a microphone, and so on), or for both. Although not shown, the base station 304 and the network entity 306 may also include user interfaces.

Referring to the processing system 384 of the base station 304 in more detail, in the downlink, IP packets from the network entity 306 may be provided to the processing system 384. The processing system 384 may implement functionality for an RRC layer, a packet data convergence protocol (PDCP) layer, a radio link control (RLC) layer, and a medium access control (MAC) layer. The processing system 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer packet data units (PDUs), error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time domain, in the frequency domain, or in both, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal, from channel condition feedback transmitted by the UE 302, or from both. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the processing system 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the processing system 332, which implements Layer-3 and Layer-2 functionality.

In the uplink, the processing system 332 provides demultiplexing between transport and logical channels, packet reassembly, deciphering, header decompression, and control signal processing to recover IP packets from the core network. The processing system 332 is also responsible for error detection.

Similar to the functionality described in connection with the downlink transmission by the base station 304, the processing system 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate modulation and coding schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the processing system 384.

In the uplink, the processing system 384 provides demultiplexing between transport and logical channels, packet reassembly, deciphering, header decompression, control signal processing to recover IP packets from the UE 302. IP packets from the processing system 384 may be provided to the core network. The processing system 384 is also responsible for error detection.

For convenience, the UE 302, the base station 304, and the network entity 306 are shown in FIGURES 3A-3E as including various components that may be configured according to the various examples described. It will be appreciated, however, that the illustrated blocks may have different functionality in different designs.

The various components of the UE 302, the base station 304, and the network entity 306 may communicate with each other over a data bus 334, data bus 382, and data bus 372, respectively. The components of FIGURES 3A-3E may be implemented in various ways. In some implementations, the components of FIGURES 3A-3E may be implemented in one or more circuits such as, for example, one or more processors, one or more ASICs (which may include one or more processors), or both. Here, each circuit may use or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code, by appropriate configuration of processor components, or by both). Similarly, some or all of the functionality represented by blocks 350 to 388 may be implemented by processor and memory component(s) of the base station 304 (e.g., by execution of appropriate code, by appropriate configuration of processor components, or by both). Also, some or all of the functionality represented by blocks 371 to 375 may be implemented by processor and memory component(s) of the network entity 306 (e.g., by execution of appropriate code, by appropriate configuration of processor components, or by both). For simplicity, various operations, acts, or functions are described as being performed "by a UE," "by a base station," "by a positioning entity," etc. However, as will be appreciated, such operations, acts, or functions may actually be performed by specific components or combinations of components of the UE, base station, positioning entity, etc., such as the processing systems 332, 384, 373, the transceivers 310, 320, 350, and 360, the memory components 340, 386, and 374, the positioning components 342, 388, and 375, etc.

FIGURE 3D shows a block diagram of a design of the DU 308 of the base station 304. The DU 308 may be equipped with multiple antennas 387 (only one shown). At the DU 308, a processing system 398 may receive data from a data source for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. The processing system 398 may also process system information (e.g., for semi-static resource partitioning information (SRPI) and/or the like) and control information (e.g., CQI requests, grants, upper layer signaling, and/or the like) and provide overhead symbols and control symbols. The processing system 398 may also generate reference symbols for reference signals (e.g., the cell-specific reference signal (CRS)) and synchronization signals (e.g., the primary synchronization signal (PSS) and secondary synchronization signal (SSS)). The processing system 398 may perform spatial processing (e.g., precoding) on the data symbols, the control symbols, the overhead symbols, and/or the reference symbols, if applicable, and may provide output symbol streams to a number of wireless transceivers 390 (only one shown). Each wireless transceivers 390 may process a respective output symbol stream (e.g., for OFDM and/or the like) to obtain an output sample stream. Each wireless transceiver 390 may further process (e.g., convert to analog, amplify, filter, and upconvert) the output sample stream to obtain a downlink signal. Downlink signals from wireless transceivers 390 may be transmitted via antennas 387.

At the DU 308, the uplink signals from UEs may be received by the antennas 387, processed by the wireless transceivers 390, and further processed by the processing system 398 to obtain decoded data and control information sent by the UEs. The DU 308 may include a DU-CU transceiver 392 to communicate with the CU 309 via a wireline connection, such as Ethernet, fiber optics, etc. The DU 308 may include a data bus 394 and a memory 396. The memory 396 may store data and program codes for the DU 308.

Some of the functions of the DU 308 may also be performed at the CU 309 or only performed at the CU 309. FIGURE 3E shows the functions also being performed at the CU 309. The CU 309 may be equipped with multiple antennas 389 (only one shown). At the CU 309, a processing system 399 may receive data from a data source (such as the DU 308) for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. The processing system 399 may also process system information (e.g., for semi-static resource partitioning information (SRPI) and/or the like) and control information (e.g., CQI requests, grants, upper layer signaling, and/or the like) and provide overhead symbols and control symbols. The processing system 399 may also generate reference symbols for reference signals (e.g., the cell-specific reference signal (CRS)) and synchronization signals (e.g., the primary synchronization signal (PSS) and secondary synchronization signal (SSS)). The processing system 399 may perform spatial processing (e.g., precoding) on the data symbols, the control symbols, the overhead symbols, and/or the reference symbols, if applicable, and may provide output symbol streams to a number of wireless transceivers 391 (only one shown). Each wireless transceivers 391 may process a respective output symbol stream (e.g., for OFDM and/or the like) to obtain an output sample stream. Each wireless transceiver 391 may further process (e.g., convert to analog, amplify, filter, and upconvert) the output sample stream to obtain a downlink signal. Downlink signals from wireless transceivers 391 may be transmitted via antennas 389.

At the CU 308, the uplink signals from UEs may be received by the antennas 389, processed by the wireless transceivers 390, and further processed by the processing system 398 to obtain decoded data and control information sent by the UEs. Alternatively, the uplink signals may be received from the DU 308 over a wireline connection at the DU-CU transceiver 393. The wireline connection may be Ethernet, fiber optics, or any like medium. The CU 309 may include a data bus 395 and a memory 397. The memory 397 may store data and program codes for the CU 309.

In some aspects, the base station 102, 126, 222, 224, 304 may include means for processing, means for transmitting, means for generating, means for reporting, and means for receiving, Such means may include one or more components of the DU and CU 308, 309 described in connection with FIGURES 3D and 3E.

NR supports a number of cellular network-based positioning technologies, including downlink-based, uplink-based, and downlink and uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. In an OTDOA or DL-TDOA positioning procedure, a UE measures the differences between the times of arrival (ToAs) of reference signals (e.g., PRS, TRS, narrowband reference signal (NRS), CSI-RS, SSB, etc.) received from pairs of base stations, referred to as reference signal time difference (RSTD) or time difference of arrival (TDOA) measurements, and reports them to a positioning entity. More specifically, the UE receives the identifiers of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity can estimate the UE's location. For DL-AoD positioning, a base station measures the angle and other channel properties (e.g., signal strength) of the downlink transmit beam used to communicate with a UE to estimate the location of the UE.

Uplink-based positioning methods include uplink time difference of arrival (UL-TDOA) and uplink angle-of-arrival (UL-AoA). UL-TDOA is similar to DL-TDOA, but is based on uplink reference signals (e.g., SRS) transmitted by the UE. For UL-AoA positioning, a base station measures the angle and other channel properties (e.g., gain level) of the uplink receive beam used to communicate with a UE to estimate the location of the UE.

Downlink and uplink-based positioning methods include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or base station), which transmits an RTT response signal (e.g., an SRS or PRS) back to the initiator. The RTT response signal includes the difference between the ToA of the RTT measurement signal and the transmission time of the RTT response signal, referred to as the reception-to-transmission (Rx-Tx) measurement. The initiator calculates the difference between the transmission time of the RTT measurement signal and the ToA of the RTT response signal, referred to as the "Tx-Rx" measurement. The propagation time (also referred to as the "time of flight") between the initiator and the responder can be calculated from the Tx-Rx and Rx-Tx measurements. Based on the propagation time and the known speed of light, the distance between the initiator and the responder can be determined. For multi-RTT positioning, a UE performs an RTT procedure with multiple base stations to enable its location to be triangulated based on the known locations of the base stations. RTT and multi-RTT methods can be combined with other positioning techniques, such as UL-AoA and DL-AoD, to improve location accuracy.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base stations.

To assist positioning operations, a location server (e.g., location server 112, 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive positioning slots, periodicity of positioning slots, muting sequence, frequency hopping sequence, reference signal identifier (ID), reference signal bandwidth, slot offset, etc.), other parameters applicable to the particular positioning method, or combinations thereof. Alternatively, the assistance data may originate directly from the base stations themselves (e.g., in periodically broadcasted overhead messages, etc.). In some cases, the UE may be able to detect neighbor network nodes itself without the use of assistance data.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

Various frame structures may be used to support downlink and uplink transmissions between network nodes (e.g., base stations and UEs).

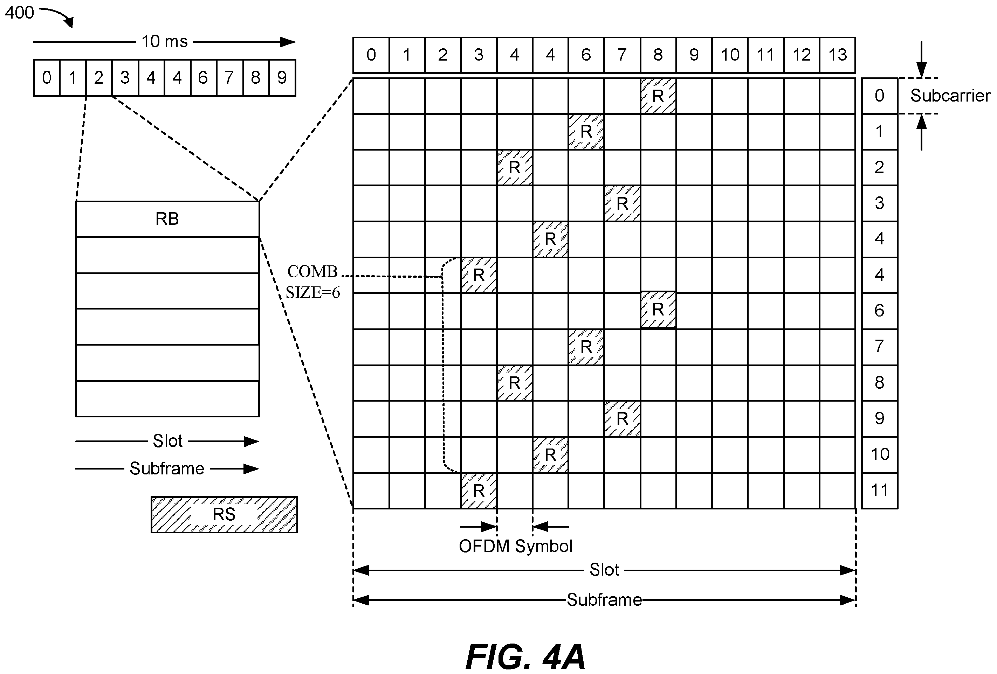

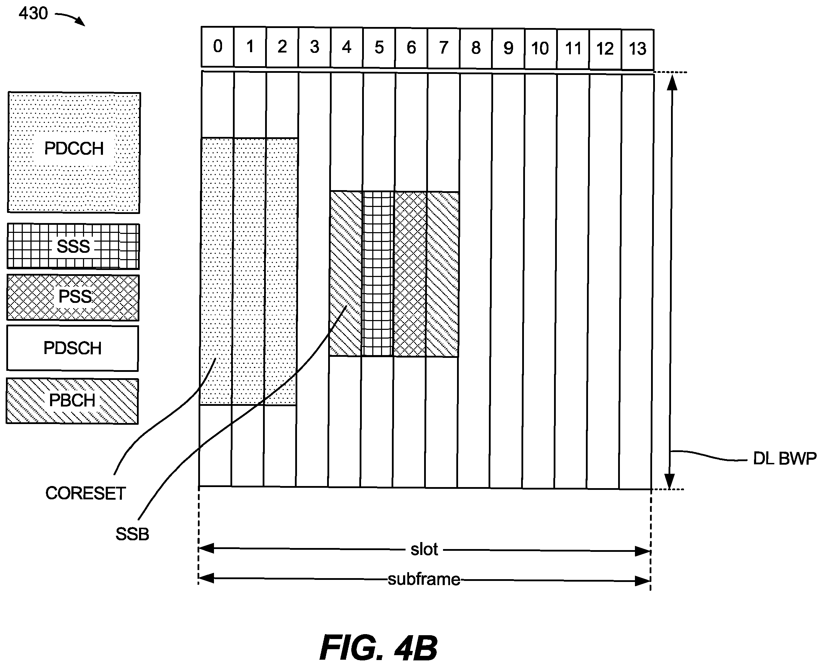

FIGURE 4A is a diagram 400 illustrating an example of a downlink frame structure, according to aspects. FIGURE 4B is a diagram 430 illustrating an example of channels within the downlink frame structure, according to aspects. Other wireless communications technologies may have different frame structures, different channels, or both.

LTE, and in some cases NR, utilizes OFDM on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (resource block) may be 12 subcarriers (or 180 kHz). Consequently, the nominal FFT size may be equal to 128, 256, 504, 1024, or 2048 for system bandwidth of 1.25, 2.5, 5, 10, or 20 megahertz (MHz), respectively. The system bandwidth may also be partitioned into subbands. For example, a subband may cover 1.8 MHz (e.g., 6 resource blocks), and there may be 1, 2, 4, 8, or 16 subbands for system bandwidth of 1.25, 2.5, 5, 10, or 20 MHz, respectively.

LTE supports a single numerology (e.g., subcarrier spacing, symbol length, etc.). In contrast, NR may support multiple numerologies (µ), for example, subcarrier spacing of 15 kHz, 30 kHz, 60 kHz, 120 kHz, and 240 kHz or greater may be available. Table 1 provided below lists some various parameters for different NR numerologies.

**Table 1**

| µ | SCS (kHz) | Symbols / Sot | Slots / Subframe | Slots / Frame | Slot Duration (ms) | Symbol Duration (µs) | Max. nominal system BW (MHz) with 4K FFT size |
|---|---|---|---|---|---|---|---|
| 0 | 15 | 14 | 1 | 10 | 1 | 66.7 | 50 |
| 1 | 30 | 14 | 2 | 20 | 0.5 | 33.3 | 100 |
| 2 | 60 | 14 | 4 | 40 | 0.25 | 16.7 | 100 |
| 3 | 120 | 14 | 8 | 80 | 0.125 | 8.33 | 400 |
| 4 | 240 | 14 | 16 | 160 | 0.0625 | 4.17 | 800 |

In the example of FIGURES 4A and 4B, a numerology of 15 kHz is used. Thus, in the time domain, a 10 millisecond (ms) frame is divided into 10 equally sized subframes of 1 ms each, and each subframe includes one time slot. In FIGURES 4A and 4B, time is represented horizontally (e.g., on the X-axis) with time increasing from left to right, while frequency is represented vertically (e.g., on the Y-axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In NR, a subframe is 1 ms in duration, a slot is fourteen symbols in the time domain, and an RB contains twelve consecutive subcarriers in the frequency domain and fourteen consecutive symbols in the time domain. Thus, in NR, there is one RB per slot. Depending on the subcarrier spacing (SCS), an NR subframe may have fourteen symbols, twenty-eight symbols, or more, and thus may have 1 slot, 2 slots, or more. The number of bits carried by each RE depends on the modulation scheme.

Some of the REs carry downlink reference (pilot) signals (DL-RS). The DL-RS may include PRS, TRS, PTRS, CRS, CSI-RS, DMRS, PSS, SSS, SSB, etc. FIGURE 4A illustrates exemplary locations of REs carrying PRS (labeled "R").

A "PRS instance" or "PRS occasion" is one instance of a periodically repeated time window (e.g., a group of one or more consecutive slots) where PRSs are expected to be transmitted. A PRS occasion may also be referred to as a "PRS positioning occasion," a "PRS positioning instance, a "positioning occasion," "a positioning instance," a "positioning repetition," or simply an "occasion," an "instance," or a "repetition."

A collection of resource elements (REs) that are used for transmission of PRS is referred to as a "PRS resource." The collection of resource elements can span multiple PRBs in the frequency domain and 'N' (e.g., 1 or more) consecutive symbol(s) within a slot in the time domain. In a given OFDM symbol in the time domain, a PRS resource occupies consecutive PRBs in the frequency domain.

The transmission of a PRS resource within a given PRB has a particular comb size (also referred to as the "comb density"). A comb size 'N' represents the subcarrier spacing (or frequency/tone spacing) within each symbol of a PRS resource configuration. Specifically, for a comb size 'N,' PRS are transmitted in every Nth subcarrier of a symbol of a PRB. For example, for comb-4, for each of the fourth symbols of the PRS resource configuration, REs corresponding to every fourth subcarrier (e.g., subcarriers 0, 4, 8) are used to transmit PRS of the PRS resource. Currently, comb sizes of comb-2, comb-4, comb-6, and comb-12 are supported for DL PRS. FIGURE 4A illustrates an exemplary PRS resource configuration for comb-6 (which spans six symbols). That is, the locations of the shaded REs (labeled "R") indicate a comb-6 PRS resource configuration.

A "PRS resource set" is a set of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a TRP ID). In addition, the PRS resources in a PRS resource set have the same periodicity, a common muting pattern configuration, and the same repetition factor (e.g., PRS-ResourceRepetitionFactor) across slots. The periodicity is the time from the first repetition of the first PRS resource of a first PRS instance to the same first repetition of the same first PRS resource of the next PRS instance. The periodicity may have a length selected from 2µ·{4, 5, 8, 10, 16, 20, 32, 40, 64, 80, 160, 320, 640, 1280, 2560, 5040, 10240} slots, with µ = 0, 1, 2, 3. The repetition factor may have a length selected from {1, 2, 4, 6, 8, 16, 32} slots.

A PRS resource ID in a PRS resource set is associated with a single beam (or beam ID) transmitted from a single TRP (where a TRP may transmit one or more beams). That is, each PRS resource of a PRS resource set may be transmitted on a different beam, and as such, a "PRS resource," or simply "resource," can also be referred to as a "beam." Note that this does not have any implications on whether the TRPs and the beams on which PRS are transmitted are known to the UE.

A "positioning frequency layer" (also referred to simply as a "frequency layer") is a collection of one or more PRS resource sets across one or more TRPs that have the same values for certain parameters. Specifically, the collection of PRS resource sets has the same subcarrier spacing (SCS) and cyclic prefix (CP) type (meaning all numerologies supported for the physical downlink shared channel (PDSCH) are also supported for PRS), the same Point A, the same value of the downlink PRS bandwidth, the same start PRB (and center frequency), and the same comb-size. The Point A parameter takes the value of the parameter ARFCN-ValueNR (where "ARFCN" stands for "absolute radio-frequency channel number") and is an identifier/code that specifies a pair of physical radio channels used for transmission and reception. The downlink PRS bandwidth may have a granularity of four PRBs, with a minimum of 24 PRBs and a maximum of 272 PRBs. Currently, up to four frequency layers have been defined, and up to two PRS resource sets may be configured for each TRP per frequency layer.

The concept of a frequency layer is somewhat like the concept of component carriers and bandwidth parts (BWPs), but different in that component carriers and BWPs are used by one base station (or a macro cell base station and a small cell base station) to transmit data channels, while frequency layers are used by several (usually three or more) base stations to transmit PRS. A UE may indicate the number of frequency layers it can support when it sends the network its positioning capabilities, such as during an LTE positioning protocol (LPP) session. For example, a UE may indicate whether it can support one or four positioning frequency layers.

FIGURE 4B illustrates an example of various channels within a downlink slot of a radio frame. In NR, the channel bandwidth, or system bandwidth, is divided into multiple BWPs. A BWP is a contiguous set of PRBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIGURE 4B, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries an MIB, may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs). Each CCE includes one or more RE group (REG) bundles (which may span multiple symbols in the time domain). Each REG bundle includes one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIGURE 4B, there is one CORESET per BWP, and the CORESET spans three symbols (although it could be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIGURE 4B is illustrated as less than a single BWP in the frequency domain. Note that although the illustrated CORESET is contiguous in the frequency domain, it need not be. In addition, the CORESET may span fewer than three symbols in the time domain.

The DCI within the PDCCH carries information about uplink resource allocation (persistent and non-persistent) and descriptions about downlink data transmitted to the UE. Multiple (e.g., up to eight) DCIs can be configured in the PDCCH, and these DCIs can have one of multiple formats. For example, there are different DCI formats for uplink scheduling, for non-MIMO downlink scheduling, for MIMO downlink scheduling, and for uplink power control. A PDCCH may be transported by 1, 2, 4, 8, or 16 CCEs in order to accommodate different DCI payload sizes or coding rates.

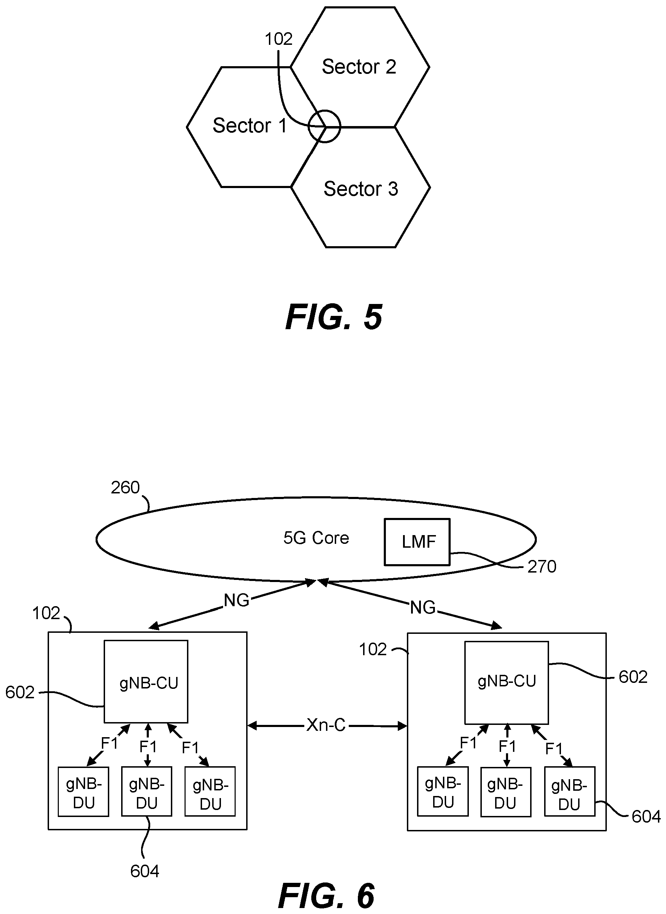

As described above, in cellular systems, the position of a mobile user equipment (UE) may be determined based on signals transmitted by the UE to a base station. FIGURE 5 is a block diagram illustrating a base station and associated sectors. As can be seen in FIGURE 5, each base station 102 is associated with three (3) hexagonal sectors.

FIGURE 6 is a block diagram illustrating components of base stations, as well as a core network, in accordance with aspects of the present disclosure. Each base station 102 includes a distributed unit (DU) 604 that collects information from each sector. The DUs 604 may also be referred to as TRPs. The DUs 604 communicate with a central unit (CU) 602 via an F1 interface, as described in 3GPP TS 38.473. The base stations 102 may communicate with each other across a backhaul connection that may operate in accordance with an Xn-C (control plane) interface protocol. The base stations 102 communicate with a core network 260 via a next generation (NG) interface, such as the NR positioning protocol A (PPa) as described in 3GPP TS 38.455. The core network 260 includes a location management function 270.

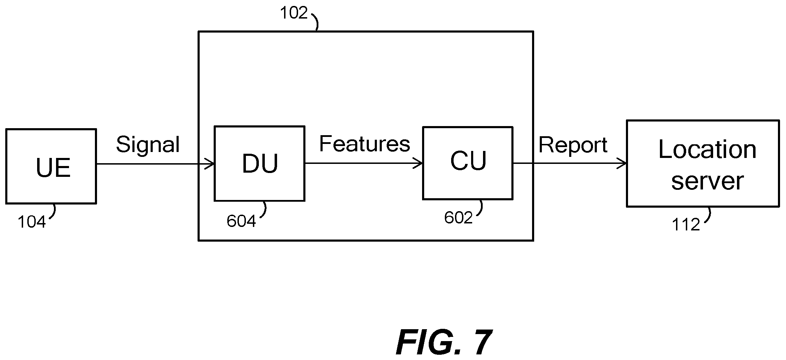

FIGURE 7 is a block diagram illustrating communication between a UE 104, a base station 102, and a location server 112, in accordance with aspects of the present disclosure. The UE 104 transmits a signal (e.g., reference signal), indicating channel information, to the base station 102. The channel information may be uplink or downlink positioning information, such as angle of arrival (AoA) or angle of departure (AoD) information. A DU 604 corresponding to the sector in which the UE 104 is located receives the channel information and estimates positioning features, which are forwarded to a CU 602 across the F1 interface. The CU 602 then extracts further positioning features (e.g., channel profile, angle of arrival (AoA), time of arrival, etc.) and transmits a position location report to an upstream server, such as the location server 112. Based on the report, the location server 112 computes the position of the UE 104.

If the UE 104 is located near sector edges, then jointly processing channel information from multiple sectors may improve estimates of positioning features, resulting in more accurate positioning. Processing the channel information from multiple sectors at the base station 102 may reduce overhead in the report transmitted to the location server 112.

The F1 interface supports signaling exchange and data transmission between endpoints, separates the radio network layer and the transport network layer, and enables the exchange of UE-associated and non-UE-associated signaling. The F1 interface is divided into an F1 control plane (F1-C) and an F1 user plane (F1-U). Aspects of the present disclosure may include signaling within the F1 control plane or the F1 user plane.

The F1 control plane (F1-C) operations include F1 interface management functions consisting of F1 setup, gNB-CU configuration updating, gNB-DU configuration updating, error indication, and a reset function. The F1 control plane (F1-C) operations also include system information management functions, in which the gNB-DU is responsible for the scheduling and broadcasting of system information. For system information broadcasting, the encoding of the NR-MIB and SIB1 is performed by the gNB-DU, while the encoding of other SI messages is performed by the gNB-CU. The F1 interface also provides signaling support for on-demand SI delivery, enabling UE energy saving.

The F1 control plane (F1-C) operations include F1 UE context management functions, which are responsible for establishment and modification of the necessary UE context. The establishment of the F1 UE context is initiated by the gNB-CU, and the gNB-DU can accept or reject the establishment based on admission control criteria (e.g., the gNB-DU can reject a context setup or modification request in case resources are not available). In addition, an F1 UE context modification request can be initiated by either the gNB-CU or gNB-DU. The receiving node may accept or reject the modification. The F1 UE context management function can also establish, modify and release Data Radio Bearers (DRBs) and Signaling Radio Bearers (SRBs). The F1 control plane (F1-C) operations also include the RRC message transfer function, which is responsible for the transferring of RRC messages from the gNB-CU to the gNB-DU, and vice versa.

F1 user plane (F1-U) functions handle the transfer of user data function between the gNB-CU and gNB-DU. The F1-U functions include a flow control function that controls the downlink user data transmission towards the gNB-DU. Several functionalities are introduced for improved performance on data transmission, such as fast re-transmission of PDCP PDUs lost due to radio link outage, discarding redundant PDUs, the re-transmitted data indication, and the status report.

If a UE is located near sector edges, then jointly processing channel information from multiple sectors may lead to better estimates of positioning features, resulting in more accurate positioning. According to aspects of the present disclosure, per-sector features are jointly processed at the base station and reported to a location server. In one implementation, each DU transmits a per-sector time-angle channel profile to the CU. The CU then processes the per-sector channel profiles to obtain a cross-sector time-angle channel profile. The CU reports features derived from the cross-sector channel profile to the server, which may then estimate a location of the UE.

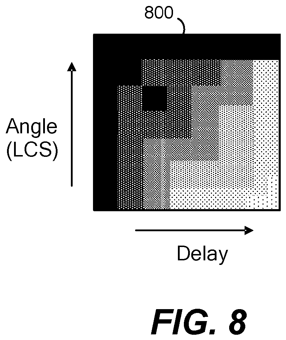

The channel profile is reported as a 2D truncated power-delay profile (TPDP) where each row corresponds to a quantized angle, and each column corresponds to a quantized delay. The TPDP may be represented by an image, for example, as seen in FIGURE 8. FIGURE 8 is a diagram showing a two-dimensional (2D) truncated power delay profile (TPDP) 800, in accordance with aspects of the present disclosure. In FIGURE 8, each row corresponds to a quantized angle in a local coordinate system (LCS) relative to the DU. Each column corresponds to a delay. The darkness of each shade represents the power at each row and column of the TPDP 800. For example, the shade may represent the power in absolute value or relative to a reference, e.g., relative to a median power across delays and angles.

According to aspects of the present disclosure, the report may comprise (1) power at each row and column, truncated to the top N channel taps (e.g., delays) for all embodiments of the present invention, and may further comprise (2) the set of quantized angle and delay values, and (3) the signal-to-noise plus interference ratio (SINR). The set of quantized angle and delay values may refer to the angle corresponding to each row in FIGURE 8 and the delay corresponding to each column in FIGURE 8. For example, the image may have 64 rows that correspond to 64 angles uniformly spaced in the range {-75, 75} degrees. The quantization of angles and delays may be uniform or non-uniform. If the quantization is uniform, the quantization information may comprise the number of quantization bins and the bin size. For example, the per-sector channel profile may be quantized to 64 angles and 64 delays. In this example, power at the top eight taps may be indicated for each angle. The DU to CU report may comprise 64*8=512 tuples of {power, angle, delay}, along with the SINR. The DU to CU report may be transmitted across the F1 interface.

According to aspects of the present disclosure, the CU fuses the per-sector TPDPs to obtain a cross-sector time-angle channel profile. The CU then reports features derived from the cross-sector channel profile to the server. In one example, the CU may concatenate the channel profiles received from the DUs in the angle dimension. In case of overlapping regions, the CU may select any of the three TPDPs. After concatenation, angles may be in a global coordinate system (GCS) spanning 360 degrees. In other aspects, the coordinate system may be based on a reference DU. The CU may select any of the DUs as the reference DU.

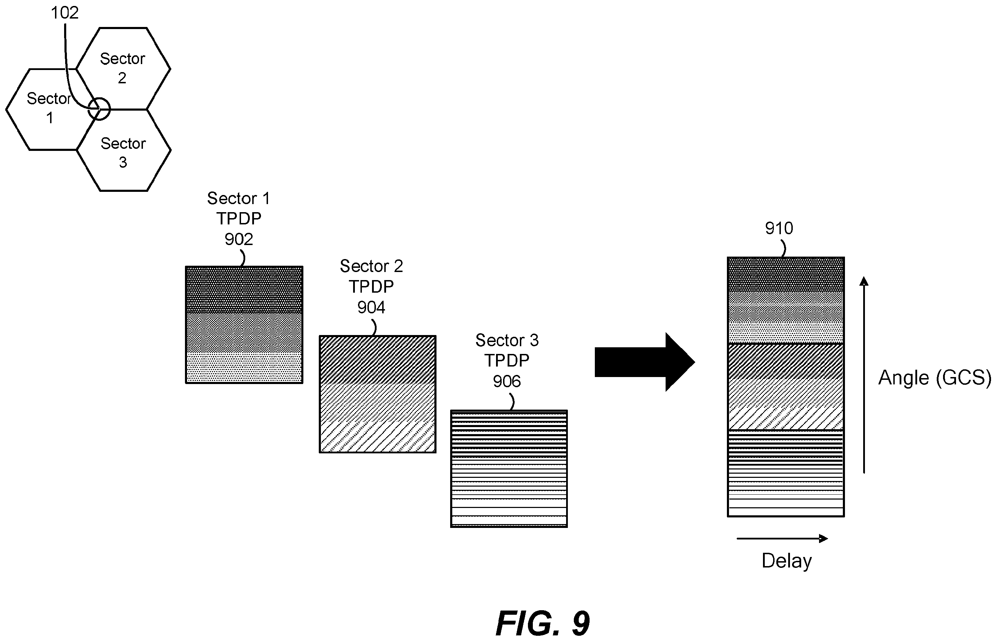

FIGURE 9 is a diagram illustrating concatenating of channel profiles, in accordance with aspects of the present disclosure. In the example of FIGURE 9, DUs of a base station 102 generate three TPDPs 902, 904, 906. A first TPDP 902 is based on information from sector 1. A second TPDP 904 is based on information from sector 2, and a third TPDP 906 is based on information from sector 3. The CU of the base station 102 concatenates the three TPDPs 902, 904, 906 to generate a cross-sector channel profile 910. The cross-sector channel profile 910 is in a global coordinate system. Although not shown in FIGURE 9, once the CU generates the cross-sector channel profile, the CU reports to the server features derived from the channel profile.

Instead of concatenating, in another example, the CU may compute a 3D channel profile. The 3D channel profile may include the 2D profile for each sector: {time, angle, sector}. In still another example, the CU only concatenates two of the per-sector profiles. This example may be appropriate when the UE is at the bottom of one of the sectors and the base station is aware of the location.

According to aspects of the present disclosure, the DUs report channel characteristics/positioning measurements in the F1 control plane, the F1 user plane, or both the F1 user and control planes. The reporting is via a new report type. In some aspects, the CU transmits a request to a specific DU through the F1 interface. The request may be for the DU to send channel characteristics for a specific UE, for a specific time stamp, and/or a specific SRS resource. The request may include what information should be sent, and/or a granularity of the report. The granularity may be indicated from a collection of configurable granularity options and may include angular and/or delay quantization levels. The request may also include a response time. For example, the request may indicate at what time the DU is expected to send the measurements. In other aspects, the DU may report channel characteristics/measurements in an unsolicited manner, in other words, without the CU sending a request.

In other aspects of the present disclosure, each DU reports a per-sector one-dimensional (1D) truncated power-delay profile to the CU. The 1D TPDP may be an angle-averaged version of the 2D TPDP. The 1D TPDP may consist of powers of the top N channel taps, delays of the top N channel taps, and an SINR. The CU uses the received per-sector 1D TPDPs to compute a time-of-arrival (ToA) estimate, which the CU reports to the server. For example, the CU may report the minimum of the three per-sector ToAs. In another example, the CU may report the ToA of the sector with the highest SINR. Because the DUs are collocated, the time of arrival is common to all DUs.

In another implementation, each DU may report a ToA estimate along with a quality metric. The CU uses these features to compute a final estimate to signal to the server. The UE may also report downlink based key performance indicators (KPIs) to the DUs. In this example, the DU to CU to server signaling may be based on downlink angle of departure (AoD) rather than uplink angle of arrival (AoA).

According to aspects of the present disclosure, when a UE is located near sector edges, joint processing of channel information from multiple sectors (e.g., multiple DUs) improves accuracy of positioning estimates. For example, time of arrival and angle of arrival estimates may be improved. By performing the joint processing at the base station, overhead in the report transmitted to the server decreases.

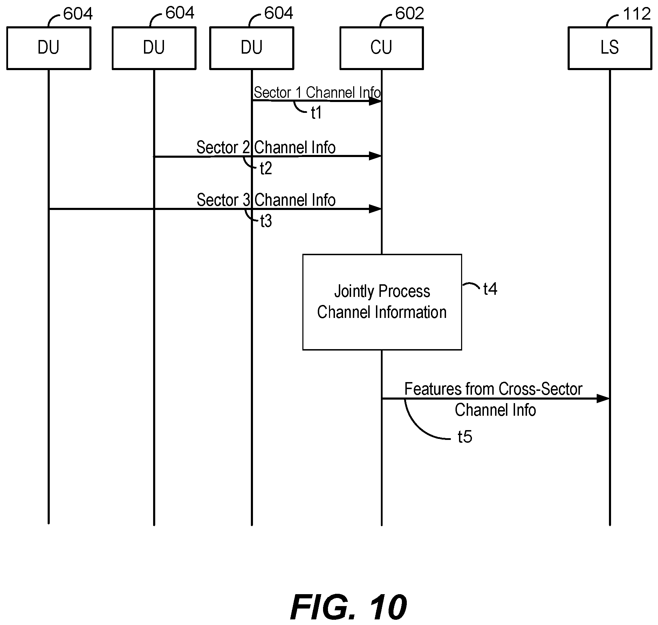

FIGURE 10 is a timing diagram illustrating an example of distributed unit (DU) to central unit (CU) to server signaling, in accordance with various aspects of the present disclosure. At time t1, a first DU 604 transmits channel information for a UE to a CU 602. At time t2, a second DU 604 transmits channel information for the UE to the CU 602. At time t3, a third DU 604 transmits channel information for the UE to the CU 602. The channel information may be a 1D or 2D per-sector TPDP, for example. The channel information may be transmitted across an F1 interface, at times t1, t2, and t3. At time t4, the CU 602 jointly processes the channel information received from the collocated DUs 604 to generate a cross-sector channel profile. The cross-sector channel profile may be a result of concatenating the per-sector information, for example. At time t5, the CU 602 reports, to a location server 112, features the cross-sector channel information. For example, the CU 602 may report a ToA estimate for the UE, in case the DUs reported 1D TPDPs.

FIGURE 11 is a flow diagram illustrating an example process 1100 performed, for example, by a central unit (CU) of a base station, in accordance with various aspects of the present disclosure. The example process 1100 is an example of DU-CU-server signaling of per-sector features for positioning.

At block 1102, the CU jointly processes channel information associated with a user equipment (UE) to generate a jointly processed report. The channel information is collected from collocated transmit and receive points (TRPs) of the base station. For example, a CU (e.g., using the DU-CU transceiver 393, memory 397, data bus 395, and/or processing system 399) may jointly process channel information to generate the jointly processed report. At block 1104, the CU transmits the jointly processed report to a location server. For example, a CU (e.g., using the antenna 389, wireless transceiver 391, memory 397, data bus 395, and/or processing system 399) may transmit the report.

FIGURE 12 is a flow diagram illustrating an example process 1200 performed, for example, by a distributed unit (DU) of a base station, in accordance with various aspects of the present disclosure. The example process 1200 is an example of DU-CU-server signaling of per-sector features for positioning.

At block 1202, the DU receives channel information associated with multiple user equipments (UEs). For example, a DU (e.g., using the antenna 387, wireless transceiver 390, memory 396, data bus 394, and/or processing system 398) may receive the information. At block 1204, the DU may generate a channel profile based on the channel information. For example, the DU (e.g., using the memory 396, data bus 394, and/or processing system 398) may generate the channel profile. Each DU may report a 2D truncated power-delay profile (TPDP), a per-sector one-dimensional (1D) truncated power-delay profile, or a ToA estimate along with a quality metric. At block 1206, the DU may report the channel profile to a central unit. For example, the DU (e.g., using the DU-CU transceiver 392, memory 396, data bus 394, and/or processing system 398) may report the channel profile via an F1 interface.

The foregoing disclosure provides illustration and description, but is not intended to be exhaustive or to limit the aspects to the precise form disclosed. Modifications and variations may be made in light of the above disclosure or may be acquired from practice of the aspects.

As used, the term "component" is intended to be broadly construed as hardware, firmware, and/or a combination of hardware and software. As used, a processor is implemented in hardware, firmware, and/or a combination of hardware and software.

Some aspects are described in connection with thresholds. As used, satisfying a threshold may, depending on the context, refer to a value being greater than the threshold, greater than or equal to the threshold, less than the threshold, less than or equal to the threshold, equal to the threshold, not equal to the threshold, and/or the like.

It will be apparent that systems and/or methods described may be implemented in different forms of hardware, firmware, and/or a combination of hardware and software. The actual specialized control hardware or software code used to implement these systems and/or methods is not limiting of the aspects. Thus, the operation and behavior of the systems and/or methods were described without reference to specific software code-it being understood that software and hardware can be designed to implement the systems and/or methods based, at least in part, on the description.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used should be construed as critical or essential unless explicitly described as such. Also, as used, the articles "a" and "an" are intended to include one or more items, and may be used interchangeably with "one or more." Furthermore, as used, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used, the terms "has," "have," "having," and/or the like are intended to be open-ended terms. Further, the phrase "based on" is intended to mean "based, at least in part, on" unless explicitly stated otherwise.

## Claims

1. A method of wireless communication performed by a central unit (602), CU, comprising:
jointly processing channel information associated with a user equipment (104), UE, in order to generate a jointly processed report comprising a cross-sector time-angle channel profile, the channel information collected from a plurality of collocated transmit and receive points (604), TRPs, of a base station (102), wherein the channel information comprises per-sector time-angle channel profiles, comprising two-dimensional truncated power delay profiles (800), TPDPs, wherein each TPDP (800) comprises a quantized local angle and a quantized delay, and the TPDPs (800) are truncated to the top N channel taps; and
transmitting the jointly processed report to a location server (112).

2. The method of claim 1, in which quantization of the local angle is uniform and quantization of the delay is uniform, the jointly processed report based on quantization information including a quantity of quantization bins and a size of the quantization bins.

3. The method of claim 1, in which the jointly processed report comprises a concatenation of TPDPs in an angle dimension.

4. The method of claim 1, in which the jointly processed report comprises a selected TPDP in response to overlapping regions of the TRPs.

5. The method of claim 1, in which the jointly processed report comprises angles in a global coordinate system or angles with respect to a reference TRP of the plurality of collocated TRPs.

6. The method of claim 1, in which the jointly processed report comprises a three-dimensional channel profile comprising a time, an angle and a sector.

7. The method of claim 1, further comprising receiving a TRP report via an F1 control plane and/or an F1 user plane.

8. The method of claim 1, further comprising transmitting a request to each of the plurality of collocated TRPs requesting each TRP to report channel information for at least one of a specific UE, a specific time period, or a specific reference signal resource.

9. The method of claim 8, in which the request includes a response time for when each TRP reports the channel information.

10. The method of claim 1, further comprising receiving the channel information from the plurality of collocated TRPs without transmitting a request for the channel information.

11. The method of claim 1, in which the channel information is based on an angle of departure associated with a downlink reference signal.

12. The method of claim 1, in which the channel information is based on an angle of arrival associated with an uplink reference signal.

13. The method of claim 1, further comprising receiving a request for the jointly processed report from the location server.

14. An apparatus (304) for wireless communication configured in a central unit (602), CU, comprising:
a transceiver (350);
a memory (386); and
at least one processor (384) communicatively coupled to the memory (386) and the transceiver (350), the at least one processor (384) configured to:
jointly process channel information associated with a user equipment (104), UE, in order to generate a jointly processed report comprising a cross-sector time-angle channel profile, the channel information collected from a plurality of collocated transmit and receive points (604), TRPs, wherein the channel information comprises per-sector time-angle channel profiles, comprising two-dimensional truncated power delay profiles, TPDPs, (800), wherein each TPDP (800) comprises a quantized local angle and a quantized delay, and the TPDPs (800) are truncated to the top N channel taps; and
transmit, via the transceiver (350), the jointly processed report to a location server (112).

15. A method of wireless communication **performed** by a distributed unit (604), DU, , comprising:
receiving channel information associated with a plurality of user equipments (104), UEs;
generating a two-dimensional truncated power delay profile (800), TPDP, based on the channel information, wherein the TPDP comprises a quantized local angle and a quantized delay and is truncated to the top N channel taps; and
reporting the two-dimensional TPDP (800) to a central unit (304).

16. A system comprising the apparatus for wireless communication configured in a central unit (602) according to claim 14, and a plurality of collocated distributed units (604), DUs.

## Patentansprüche

1. Verfahren zur drahtlosen Kommunikation, durchgeführt von einer CU (Central Unit) (602), das Folgendes beinhaltet:
gemeinsames Verarbeiten von mit einem UE (User Equipment) (104) assoziierten Kanalinformationen, um einen gemeinsam verarbeiteten Bericht zu erzeugen, der ein sektorübergreifendes Zeit-Winkel-Kanalprofil umfasst, wobei die Kanalinformationen von mehreren kolokalisierten TRPs (Transmit and Receive Points) (604) einer Basisstation (102) gesammelt wurden, wobei die Kanalinformationen Pro-Sektor-Zeit-Winkel-Kanalprofile umfassen, die zweidimensionale TPDPs (Truncated Power Delay Profiles) (800) umfassen, wobei jedes TPDP (800) einen quantisierten lokalen Winkel und eine quantisierte Verzögerung umfasst und die TPDPs (800) auf die obersten N Kanalabgriffe trunkiert sind; und
Senden des gemeinsam verarbeiteten Berichts zu einem Standort-Server (112).

2. Verfahren nach Anspruch 1, wobei die Quantisierung des lokalen Winkels uniform ist und die Quantisierung der Verzögerung uniform ist, wobei der gemeinsam verarbeitete Bericht auf Quantisierungsinformationen einschließlich einer Anzahl von Quantisierungsbins und einer Größe der Quantisierungsbins basiert.

3. Verfahren nach Anspruch 1, wobei der gemeinsam verarbeitete Bericht eine Verkettung von TPDPs in einer Winkeldimension umfasst.

4. Verfahren nach Anspruch 1, wobei der gemeinsam verarbeitete Bericht ein ausgewähltes TPDP als Reaktion auf überlappende Regionen der TRPs umfasst.

5. Verfahren nach Anspruch 1, wobei der gemeinsam verarbeitete Bericht Winkel in einem globalen Koordinatensystem oder Winkel in Bezug auf einen Referenz-TRP der mehreren kollokierten TRPs umfasst.

6. Verfahren nach Anspruch 1, wobei der gemeinsam verarbeitete Bericht ein dreidimensionales Kanalprofil umfasst, das eine Zeit, einen Winkel und einen Sektor umfasst.

7. Verfahren nach Anspruch 1, das ferner das Empfangen eines TRP-Berichts über eine F1-Steuerebene und/oder eine F1-Nutzerebene umfasst.

8. Verfahren nach Anspruch 1, das ferner das Senden einer Anforderung zu jedem der mehreren kolokalisierten TRPs beinhaltet, die jeden TRP auffordert, Kanalinformationen für mindestens eines von einem spezifischen UE, einer spezifischen Zeitperiode und einer spezifischen Referenzsignalressource zu melden.

9. Verfahren nach Anspruch 8, wobei die Anforderung eine Antwortzeit für das Melden der Kanalinformationen durch jeden TRP enthält.

10. Verfahren nach Anspruch 1, das ferner das Empfangen der Kanalinformationen von den mehreren kollokalisierten TRPs beinhaltet, ohne eine Anforderung für die Kanalinformationen zu senden.

11. Verfahren nach Anspruch 1, wobei die Kanalinformationen auf einem mit einem Downlink-Referenzsignal assoziierten Abgangswinkel basieren.

12. Verfahren nach Anspruch 1, wobei die Kanalinformationen auf einem mit einem Uplink-Referenzsignal assoziierten Ankunftswinkel basieren.

13. Verfahren nach Anspruch 1, das ferner das Empfangen einer Anforderung für den gemeinsam verarbeiteten Bericht vom Standort-Server beinhaltet.

14. Vorrichtung (304) für drahtlose Kommunikation, konfiguriert in einer CU (Central Unit) (602), die Folgendes umfasst:
einen Transceiver (350);
einen Speicher (386); und
mindestens einen Prozessor (384), der mit dem Speicher (386) und dem Transceiver (350) kommunikativ gekoppelt ist, wobei der mindestens eine Prozessor (384) konfiguriert ist zum:
gemeinsamen Verarbeiten von mit einem UE (User Equipment) (104) assoziierten Kanalinformationen, um einen gemeinsam verarbeiteten Bericht zu erzeugen, der ein sektorübergreifendes Zeit-Winkel-Kanalprofil umfasst, wobei die Kanalinformationen von mehreren kolokalisierten TRPs (Transmit and Receive Points) (604) einer Basisstation (102) gesammelt wurden, wobei die Kanalinformationen Pro-Sektor-Zeit-Winkel-Kanalprofile umfassen, die zweidimensionale TPDPs (Truncated Power Delay Profiles) (800) umfassen, wobei jedes TPDP (800) einen quantisierten lokalen Winkel und eine quantisierte Verzögerung umfasst und die TPDPs (800) auf die obersten N Kanalabgriffe trunkiert sind; und
Senden, über den Transceiver (350), des gemeinsam verarbeiteten Berichts zu einem Standort-Server (112).

15. Verfahren zur drahtlosen Kommunikation, durchgeführt von einer DU (Distributed Unit) (604), das Folgendes beinhaltet:
Empfangen von Kanalinformationen, die mit mehreren UEs (User Equipments) (104) assoziiert sind;
Erzeugen eines zweidimensionalen TPDP (Truncated Power Delay Profile) (800) auf der Basis der Kanalinformationen, wobei das TPDP einen quantisierten lokalen Winkel und eine quantisierte Verzögerung umfasst und auf die obersten N Kanalabgriffe trunkiert ist; und
Melden des zweidimensionalen TPDP (800) an eine Zentraleinheit (304).

16. System, das die Vorrichtung zur drahtlosen Kommunikation, die in einer Zentraleinheit (602) nach Anspruch 14 konfiguriert ist, und mehrere kolokalisierte DUs (Distributed Units) (604) umfasst.

## Revendications

1. Procédé de communication sans fil réalisé par une unité centrale (602), CU, comprenant :
le traitement conjoint d'informations de canal associées à un équipement utilisateur, UE, (104), afin de générer un rapport traité conjointement comprenant un profil de canal temps-angle tous secteurs, les informations de canal étant collectées à partir d'une pluralité de points d'émission-réception, TRP, (604), d'une station de base (102), dans lequel les informations de canal comprennent des profils de canal temps-angle par secteur, comprenant des profils de retard de puissance tronqués, TPDP, bidimensionnels, (800) dans lequel chaque TPDP (800) comprend un angle local quantifié et un retard quantifié, et les TPDP (800) sont tronqués aux N prises de canal supérieures ; et
la transmission du rapport traité conjointement à un serveur de localisation (112).

2. Procédé selon la revendication 1, dans lequel la quantification de l'angle local est uniforme et la quantification du retard est uniforme, le rapport traité conjointement étant basé sur des informations de quantification comportant une quantité de compartiments de quantification et une taille des compartiments de quantification.

3. Procédé selon la revendication 1, dans lequel le rapport traité conjointement comprend une concaténation de TPDP dans une dimension angulaire.

4. Procédé selon la revendication 1, dans lequel le rapport traité conjointement comprend un TPDP sélectionné en réponse à des régions chevauchantes des TRP.

5. Procédé selon la revendication 1, dans lequel le rapport traité conjointement comprend des angles dans un système de coordonnées globales ou des angles par rapport à un TRP de référence de la pluralité de TRP cositués.

6. Procédé selon la revendication 1, dans lequel le rapport traité conjointement comprend un profil de canal tridimensionnel comprenant un temps, un angle et un secteur.

7. Procédé selon la revendication 1, comprenant en outre la réception d'un rapport TRP par l'intermédiaire d'un plan de commande F1 et/ou d'un plan utilisateur F1.

8. Procédé selon la revendication 1, comprenant en outre la transmission d'une demande à chacun de la pluralité de TRP cositués demandant à chaque TRP de rapporter des informations de canal pour au moins un UE spécifique, une période de temps spécifique ou une ressource de signal de référence spécifique.

9. Procédé selon la revendication 8, dans lequel la demande comporte un temps de réponse pour le rapport des informations de canal par chaque TRP.

10. Procédé selon la revendication 1, comprenant en outre la réception des informations de canal à partir de la pluralité de TRP cositués sans transmission de demande d'informations de canal.

11. Procédé selon la revendication 1, dans lequel les informations de canal sont basées sur un angle de départ associé à un signal de référence de liaison descendante.

12. Procédé selon la revendication 1, dans lequel les informations de canal sont basées sur un angle d'arrivée associé à un signal de référence de liaison montante.

13. Procédé selon la revendication 1, comprenant également la réception d'une demande du rapport traité conjointement du serveur de localisation.

14. Appareil (304) de communication sans fil configuré dans une unité centrale (602), CU, comprenant :
un émetteur-récepteur (3 50) ;
une mémoire (386) ; et
au moins un processeur (384) couplé en communication à la mémoire (3 86) et à l'émetteur-récepteur (350), l'au moins un processeur (3 84) étant configuré pour :
traiter conjointement des informations de canal associées à un équipement utilisateur, UE, (104), afin de générer un rapport traité conjointement comprenant un profil de canal temps-angle tous secteurs, les informations de canal étant collectées à partir d'une pluralité de points d'émission-réception, TRP, (604), dans lequel les informations de canal comprennent des profils de canal temps-angle par secteur, comprenant des profils de retard de puissance tronqués, TPDP, bidimensionnels (800), dans lequel chaque TPDP (800) comprend un angle local quantifié et un retard quantifié, et les TPDP (800) sont tronqués aux N prises de canal supérieures ; et
transmettre, par l'intermédiaire de l'émetteur-récepteur (350), le rapport traité conjointement à un serveur de localisation (112).

15. Procédé de communication sans fil réalisé par une unité distribuée, DU, (604), comprenant :
la réception d'informations de canal associées à une pluralité d'équipements utilisateurs, UE, (104) ;
la génération d'un profil de retard de puissance tronqué, TPDP, bidimensionnel (800), basé sur les informations de canal, dans lequel le TPDP comprend un angle local quantifié et un retard quantifié et est tronqué aux N prises de canal supérieures ; et
le rapport du TPDP bidimensionnel (800) à une unité centrale (304).

16. Système comprenant l'appareil de communication sans fil configuré dans une unité centrale (602) selon la revendication 14, et une pluralité d'unités distribuées, DU, cosituées (604).
